# EUROPEAN PATENT APPLICATION

(11) **EP 1 878 555 A2**
(43) Date of publication of application: **16.01.2008**
(21) Application number: 07012278.3
(22) Date of filing: 22.06.2007
(51) Int. Cl.: B29C 44/58, B29C 44/60

(54) **Molding method and apparatus for producing molded foamed resin product**

(30) Priority: 14.07.2006 JP 2006194262
(71) Applicant: Mazda Motor Corporation, Aki-gun, Hiroshima 730-8670 (JP)
(72) Inventor: Miyachi, Toshiki, Aki-gun, Hiroshima 731-4311 (JP); Kaneko, Mitsuharu, Aki-gun, Hiroshima 730-8670 (JP); Ogawa, Junichi, Aki-gun, Hiroshima 730-8670 (JP)
(74) Representative: Müller-Boré & Partner Patentanwälte

(57) **Abstract**

In a molding method for producing a molded foamed resin product (24) in which an expandable resin (21) containing a resin material containing a foaming agent is charged into a cavity (16) between a stationary mold half (3) and a movable mold half (4) and core-backing is then performed by setting the movable mold half (4) back from the stationary mold half (3) to extend the cavity (16) to a volume corresponding to the size of the molded foamed resin product (24), the core-backing speed is controlled to be higher in a latter core-backing term (Ts) than in a previous core-backing term (Tf), thereby providing a good-appearance molded foamed resin product having a skin layer over the entire surrounding surface and a homogeneous foam structure under the skin layer.

## Description

### BACKGROUND OF THE INVENTION

### (a) Field of the Invention

This invention relates to molding methods and apparatuses for producing a molded foamed resin product.

### (b) Description of the Related Art

The core-back technique used in molding an expandable resin to produce a molded foamed resin product is known to promote foaming of the expandable resin. This technique involves keeping the cavity of a mold at a small volume during charging of the expandable resin into the mold and setting a movable mold half of the mold back from a stationary mold half of the mold after the end of the charging, i.e., performing so-called "core-backing", to extend the cavity to a volume corresponding to the molded article size. For example, Published Japanese Patent Application No. H10-100182 discloses a technique in which an expandable resin is charged into a mold composed of a die and a piston and the piston is then set back from the die at a speed lower than the expansion speed of the expandable resin. Specifically, if the setback speed of the piston exceeds the expansion speed of the expandable resin, a gap will be created between the piston and the surface of the resin in process of foaming and foaming gas in the resin may leak out through the resin surface to reduce the foam expansion ratio. To avoid this, the piston is set at the setback speed described above.

### SUMMARY OF THE INVENTION

In order to obtain a light-weight, good-appearance molded foamed resin product, it is necessary to form a defect-free skin layer at the surrounding surface of the expandable resin and expand the expandable resin well inside. The skin layer is formed so that the expandable resin charged in the mold comes into contact with the molding surfaces of the mold and is thereby rapidly cooled.

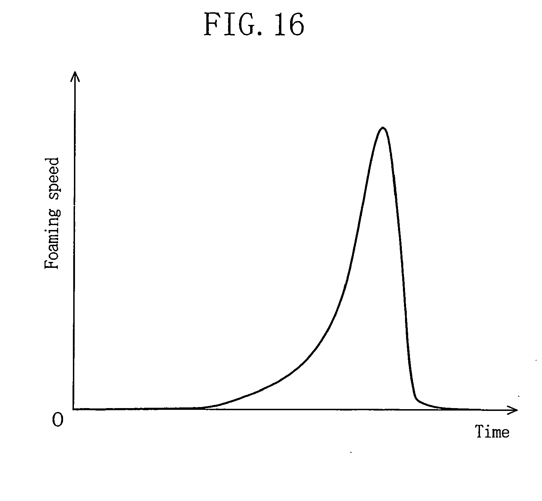

According to the conventional core-back technique as described above, the in-mold pressure raised by charging of the expandable resin is relieved and foaming of the expandable resin is therefore promoted. However, the promotion of foaming may cause breakage of the skin layer. Figure **16** is a graph showing changes in foaming speed with time when an expandable resin is allowed to freely expand with no pressure applied thereon. The figure shows that with free expansion, i.e., with the pressure relieved, foaming rapidly progressed. Thus, when the speed of core-backing (hereinafter, referred to as the core-backing speed) is high, pressure relief due to this may rapidly develop foaming of the expandable resin to such an extent as to cause a breakage of the skin layer being formed by contact with the molding surfaces of the mold. Particularly just after the mold is charged with the expandable resin, the expandable resin itself has a high foaming pressure. This easily causes breakage of the skin layer owing to abrupt expandable resin foaming due to core-backing, thereby degrading the appearance of the resultant molded article. Furthermore, foaming agent leaks out through broken holes of the skin layer, which makes the internal expanding condition of the article uneven and reduces the foam expansion ratio.

On the other hand, when the core-backing speed is low, the mold takes much heat from the expandable resin and thereby decreases the expandable resin temperature. Therefore, the expandable resin increases its viscosity, which works more against its expansion or foaming as the end of core-backing approaches. Furthermore, cooldown and curing of the expandable resin progress fast. Therefore, the expandable resin may not expand to an expected thickness and easily results in a molded article having uneven thickness.

With the foregoing in mind, the present invention has an object of providing a molded foamed resin product free from foaming defects and having a good appearance by appropriately controlling the core-backing speed.

To attain the above object, in the present invention, the core-backing speed in the previous core-backing term is made slower than that in the latter core-backing term.

Specifically, an aspect of the present invention is directed to a molding method for producing a molded foamed resin product in which an expandable resin containing a resin material containing a foaming agent is charged into a cavity between a stationary mold half and a movable mold half and core-backing is then performed by setting the movable mold half back from the stationary mold half to extend the cavity to a volume corresponding to the size of the molded foamed resin product. In the molding method, the core-backing speed is controlled to be low in a previous core-backing term and higher in a latter core-backing term than in the previous core-backing term.

Another aspect of the present invention is directed to a molding apparatus for producing a molded foamed resin product including: a mold including a stationary mold half and a movable mold half; a movable mold half actuator for sliding the movable mold half towards and away from the stationary mold half; and an injector for charging an expandable resin containing a resin material containing a foaming agent into a cavity between the stationary mold half and the movable mold half, in which, after the charging of the expandable resin, core-backing is performed by setting the movable mold half back from the stationary mold half to extend the cavity to a volume corresponding to the size of the molded foamed resin product. Furthermore, the molding apparatus includes a controller for controlling the movement of the movable mold half actuator so that the core-backing speed is low in a previous core-backing term and higher in a latter core-backing term than in the previous core-backing term.

According to the above aspects of the present invention, the core-backing speed is made low in the previous core-backing term in which the expandable resin has high foaming pressures. This restrains an abrupt foaming of the expandable resin and avoids the foaming from causing breakage of the skin layer. Furthermore, since the core-backing speed is higher in the latter core-backing term than in the previous core-backing term, the foaming of the expandable resin is promoted during the latter core-backing term, which is advantageous in rapidly and uniformly expanding the entire expandable resin in spite of increase in its viscosity.

The core-backing is preferably started after the elapse of a predetermined delay time from the end of charging of the expandable resin. Since the predetermined delay time exists, the formation of the skin layer progresses during the delay time, which is advantageous in preventing breakage of the skin layer due to the foaming.

The core-backing speed in the latter core-backing term is preferably equal to or lower than the expansion speed of the expandable resin in free expansion. The reason for this is that if the core-backing speed in the latter core-backing term is higher than the expansion speed, a gap will be created between the movable mold half and the expandable resin and foaming gas in the resin may leak out through the resin surface to reduce the scale foam expansion ratio and cause breakage of the skin layer.

The core-backing may be continued without stopping the movable mold half over the previous and latter core-backing terms. This eliminates time loss and enhances production efficiency.

The core-backing speed may be reduced to zero during transition from the previous core-backing term to the latter core-backing term. In this case, while the core-backing speed is zero, the formation of the skin layer progresses, thereby forming a high-strength skin layer. This is advantageous in preventing the skin layer from being broken through by the foaming of the expandable resin.

Applicable foaming agents include organic compounds including azo compounds such as azodicarbon amid, nitroso compounds such as N,N'-dinitroso-pentamethylene tetramine, and sulfonyl hydrazide compounds such as 4,4'-oxybis(benzenesulfonyl hydrazide), inorganic compounds such as sodium bicarbonate, other chemical foaming agents, and physical foaming agents such as carbon dioxide gas, nitrogen gas, air, propane and butane. Particularly for the physical foaming agents, if they are in the form of supercritical fluid, they can disperse and dissolve well into a resin material and enhance the foaming pressure. Therefore, the physical foaming agent is preferably used in the form of supercritical fluid.

The physical foaming agents generally have higher foaming pressures than chemical foaming agents. Therefore, the above core-backing controls according to the present invention are useful particularly for the physical foaming agents.

Furthermore, when the supercritical fluid is used as the foaming agent, fine bubble cells are formed under the skin layer, which is advantageous in ensuring the rigidity of the molded article while reducing the weight thereof.

### BRIEF DESCRIPTION OF THE DRAWINGS

Figure **1** is a front view showing a molding apparatus for producing a molded foamed resin product according to an embodiment of the present invention.
Figure **2** shows cross-sectional views stepwise illustrating states of a mold from the end of charging of an expandable resin to the completion of a molded foamed resin product.
Figure **3** is a graph showing changes in core-backing speed with time in Example 1.
Figure **4** is a graph showing changes in the amount of backward movement (the core-backing distance) of the mold with time in Example 1.
Figure **5** is a cross-sectional view showing a state of an expandable resin just after it is charged into the mold in Example 1.
Figure **6** is a cross-sectional view showing a state of the expandable resin when a delay time has passed after the charging into the mold in Example 1.
Figure **7** is a cross-sectional view showing a state of the expandable resin at the end of a previous core-backing term in Example 1.
Figure **8** is a cross-sectional view showing a state of the expandable resin at the end of a latter core-backing term in Example 1.
Figure **9** is a graph showing the relation between the foaming pressure of an expandable resin in the mold and the core-backing distance.
Figure **10** is a graph showing changes in core-backing speed with time in Example 2.
Figure **11** is a graph showing changes in core-backing speed with time in Example 3.
Figure **12** is a graph showing changes in core-backing speed with time in Example 4.
Figure **13** is a graph showing changes in core-backing speed with time in Example 5.
Figure **14** is a graph showing changes in core-backing speed with time in Example 6.
Figure **15** is a graph showing changes in core-backing speed with time in Example 7.
Figure **16** is a graph showing changes in foaming speed with time when an expandable resin is allowed to freely expand.

### DETAILED DESCRIPTION OF THE INVENTION

A description is given below of an embodiment of the present invention with reference to the drawings. Note that the following description of the preferred embodiment is merely illustrative in nature and is not intended to limit the scope, applications and use of the invention.

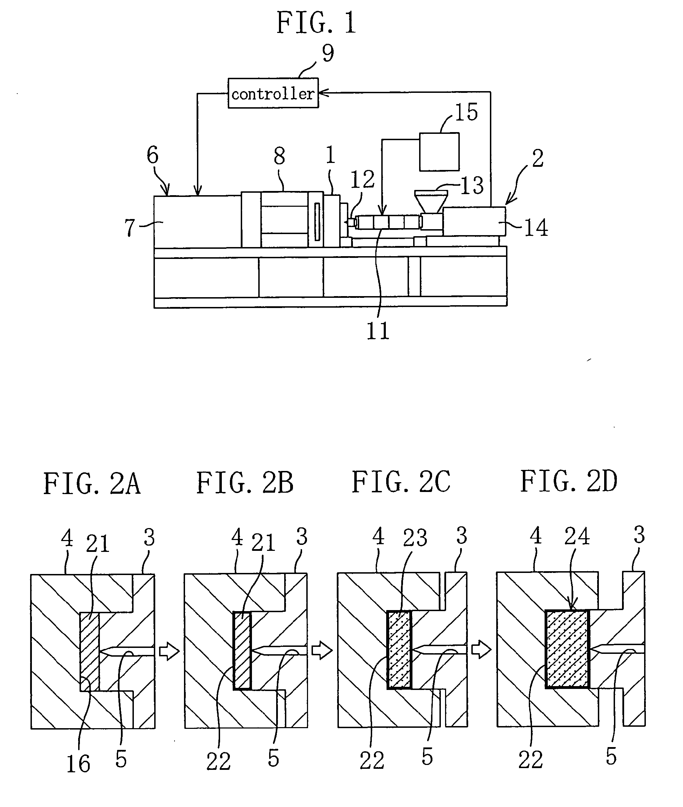

Figure **1** shows a molding apparatus for producing a molded foamed resin product, wherein reference numeral **1** denotes a mold and reference numeral **2** denotes an injector for charging an expandable resin into the cavity of the mold **1.**

Referring to Figure **2,** the mold **1** is composed of a stationary mold half **3** and a movable mold half **4** movable towards and away from the stationary mold half **3.** The stationary mold half **3** has a sprue **5** formed therein. Referring again to Figure **1,** the mold **1** is connected to a movable mold half actuator **6** for sliding the movable mold half **4** towards and away from the stationary mold half **3.** The movable mold half actuator **6** is composed of a piston/cylinder assembly **7** and a guide **8** for guiding the forward and backward movement of the movable mold half **4** actuated by the piston/cylinder assembly **7.** The movement of the piston/cylinder assembly **7** is controlled by a controller **9** using a microcomputer.

The injector **2** includes a cylinder **11** having a screw rotatably inserted therein and a heater disposed on the outer periphery thereof. The cylinder **11** is provided at the tip with a nozzle **12.** The nozzle **12** is connected to the sprue **5** in the stationary mold half **3.** The cylinder **11** is also provided at the root end with a hopper **13** for feeding an expandable resin or a resin material and a screw actuator **14** for rotating and reciprocating the screw.

In molding an expandable resin containing a chemical foaming agent, the expandable resin is loaded through the hopper **13** into the cylinder **11.** In molding an expandable resin containing a physical foaming agent, a resin material is loaded through the hopper **13** into the cylinder **11** and the physical foaming agent is fed in the form of supercritical fluid from a supercritical fluid generator **15** partway into the cylinder **11.** In producing a fiber-reinforced molded foamed resin product, reinforcing fibers are mixed in advance into a resin material.

Reinforcing fibers preferably used are those having an average fiber length smaller than the thickness of a molded foamed resin product to be produced in a direction of sliding of the movable mold half (a core-backing direction). In other words, molded foamed resin products preferably molded are those having a larger thickness in the core-backing direction than the average fiber length of reinforcing fibers used, particularly those having a thickness twice larger than the average fiber length. This is advantageous in utilizing the spring-back effect of reinforcing fibers to promote foaming of the expandable resin. The type of reinforcing fibers used is not particularly limited. For example, glass fibers or carbon fibers may be used.

### Core-backing Control

With the cavity **16** between the fixed and movable mold halves **3** and **4** charged with an expandable resin **21** as shown in Figure **2A,** the controller **9** controls the movable mold half actuator **6** to perform core-backing, i.e., set the movable mold half **4** back from the stationary mold half **3.** Thus, the cavity **16** is extended to a volume corresponding to the size of a molded article. Figures **2B, 2C** and **2D** schematically show a state of the mold **1** when the delay time from the end of charging of the expandable resin to the start of core-backing terminates, a state of the mold **1** in process of core-backing and a state of the mold **1** at the end of core-backing, respectively. In Figures **2B** to **2D,** the bold border line in the cavity **16** denotes a skin layer **22** at the surface of the expandable resin, reference numeral **23** denotes an expanding foam of the expandable resin and reference numeral **24** denotes a molded foamed resin product after the end of foaming (after the end of core-backing).

Hereinafter, core-baking controls according to the present invention will be described with reference to a plurality of examples.

### Example 1

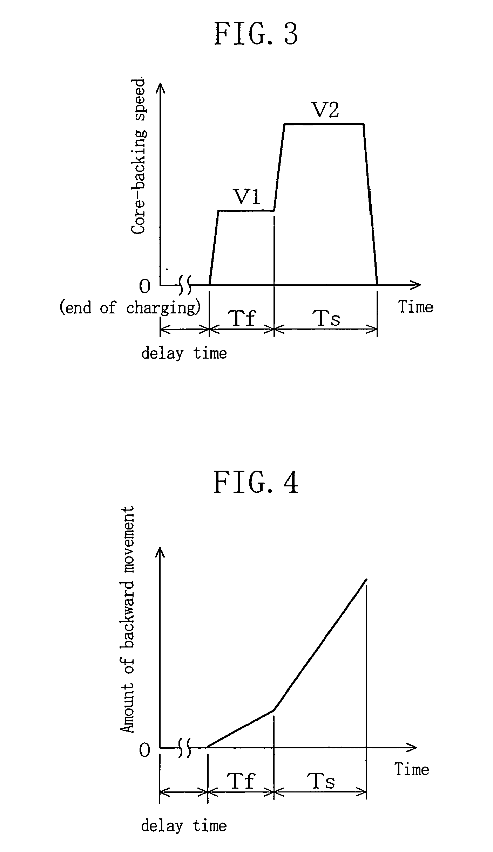

Figure **3** is a time chart showing a core-backing control according to Example 1. The controller **9** receives a signal indicating the end of charging of an expandable resin (the end of injection) from the injector **2** and then starts core-backing at an interval of a predetermined delay time. The core-backing term is divided into a previous core-backing term **Tf** in which core-backing is performed at a low speed and a latter core-backing term **Ts** in which core-backing is performed at a higher speed than in the previous core-backing term **Tf.** In this example, the controller **9** controls core-backing so that, in the previous core-backing term **Tf,** the movable mold half **4** is accelerated from a speed of zero up to a first speed **V1** and held at the first speed **V1** for a predetermined time and, in the latter core-backing term **Ts,** the movable mold half **4** is accelerated from the first speed **V1** up to a second speed **V2,** then held at the second speed **V2** for a predetermined time and then decelerated down to a speed of zero. In this example, the second speed **V2** is higher than the first speed **V1** and the first and second speeds **V1** and **V2** are set to be equal to or lower than the expansion speed of the expandable resin in free expansion and, preferably, to be lower than the expansion speed.

The lengths of the delay time, the previous core-backing term **Tf** and the latter core-backing term **Ts** vary depending upon the type and the injection temperature of expandable resin used and the mold temperature. For example, the delay time can be set within the range of 5 to 25 seconds and the previous core-backing term **Tf** and the latter core-backing term **Ts** can be set within the range of 1 to 10 seconds. For the amount of extension of the cavity **16** by core-backing, the cavity **16** can be extended in the previous core-backing term **Tf,** for example, so that its thickness in the core-backing direction becomes 1.3 times to 1.7 times larger than that at the end of charging of the expandable resin, and can be extended in the latter core-backing term **Ts,** for example, so that its thickness in the core-backing direction becomes 2.1 times to 2.6 times larger than that at the end of charging of the expandable resin.

Figure **4** shows changes in the amount of backward movement (the core-backing distance) of the movable mold half **4** due to the core-backing control with time. After a delay time has passed from the end of charging, the previous core-backing term **Tf** is reached. The amount of backward movement of the movable mold half **4** gradually increases during the previous core-backing term **Tf** and then gradually increases at a higher speed during the latter core-backing term **Ts.**

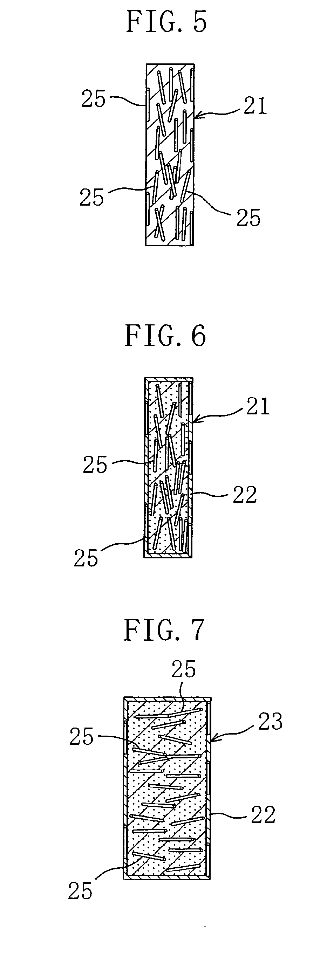

Figures **5** to **8** stepwise illustrates how a molded foamed resin product **24** is molded by the core-backing control. In this example, with the use of a supercritical fluid of carbon dioxide gas as a foaming agent and glass fibers as reinforcing fibers **25,** the molded article **24** was obtained that has a thickness in the core-backing direction twice or more times larger than the average fiber length (1.0 to 1.8 mm) of the reinforcing fibers **25.**

Figure **5** shows an expandable resin **21** at the end of charging into the mold. The expandable resin **21** flows through the sprue **5** in the stationary mold half **3** shown in Figure **2** into the cavity **16** towards its surrounding region. Therefore, by the effect of the flow in the cavity **16,** the reinforcing fibers **25** are oriented along the opposed molding surfaces of the fixed and movable mold halves **3** and **4** (in a direction substantially orthogonal to the core-backing direction (the thickness direction of the molded article)).

Figure **6** shows the expandable resin **21** when the delay time has passed. During the delay time, the expandable resin **21** gives heat at a part thereof in contact with the molding surfaces of the mold **1** (at its surrounding surface) to the mold **1** and thereby starts curing to gradually form a skin layer **22** around it.

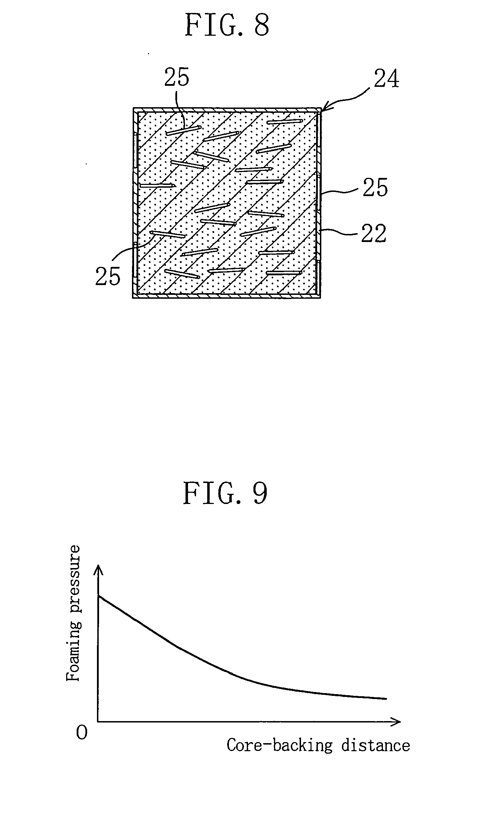

Figure **7** shows the expandable resin **21** at the end of the previous core-backing term **Tf.** Since core-backing starts and reduces the in-mold pressure, the expandable resin **21** develops expansion and gradually becomes a foam **23.** During the previous core-backing term **Tf,** the expandable resin **21** has high foaming pressures as shown in Figure **9** and the spring-back effect of the reinforcing fibers **25** causes an expansion force inside the expandable resin **21.** However, since the core-backing speed is restricted to the first speed **V1,** this avoids an abrupt foaming of the foaming agent and prevents foaming from progressing to such an extent as to cause a breakage of the skin layer **2.** Also during the previous core-backing term **Tf,** the foam **23** gives heat to the mold **1** to gradually form the skin layer **22** and gradually increase the strength of the skin layer **22.**

Figure **8** shows the expandable resin **21** at the end of the latter core-backing term **Ts.** In the latter core-backing term **Ts,** the core-backing speed is set at the second speed **V2** higher than the first speed **V1** in the previous core-backing term **Tf.** Therefore, by a combination of in-mold pressure reduction due to core-backing at the higher speed and the spring-back effect of the reinforcing fibers **25,** the foaming agent in the foam **23** rapidly expands so that the entire foam **23** uniformly expands and foams. Since the high-strength skin layer **22** has yet been formed at the start of the latter core-backing term Ts, this prevents the skin layer **22** from breaking owing to the foaming during the latter core-backing term **Ts.** As a result, a good appearance molded foamed resin product **24** can be obtained that has a homogeneous foam structure under the skin layer **22.**

### Example 2

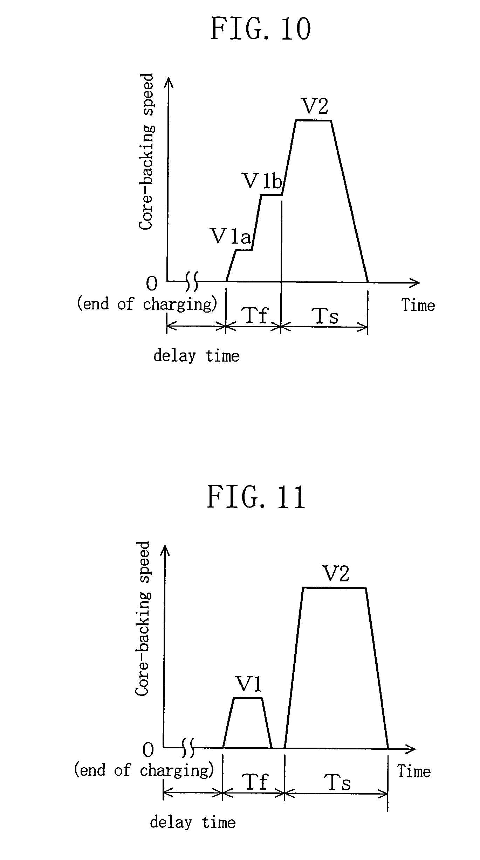

Figure **10** shows a core-backing control according to Example 2. In this example, in the previous core-backing term **Tf** after the elapse of the delay time, the core-backing speed is stepwise increased so as to be first increased to a first A speed **V1a,** held at the first A speed **V1a** for a certain period of time, then increased to a first B speed **V1b** and then held at the first B speed **V1b** for a certain period of time. In the latter core-backing term **Ts,** like Example 1, the core-backing speed is increased to the second speed **V2** higher than in the previous core-backing term **Tf** and held at the second speed **V2** for a certain period of time. Then, the core-backing is terminated.

Also in this example, the core-backing speed is restricted to relatively low speeds **V1a** and **V1b** in the previous core-backing term **Tf** and increased to a relatively high second speed **V2** in the latter core-backing term **Ts.** Therefore, like Example 1, the entire foam can be uniformly expanded without breaking through the skin layer. As a result, a good appearance molded foamed resin product can be obtained that has a homogeneous foam structure under the skin layer.

Furthermore, since the core-backing speed is stepwise increased in the previous core-backing term **Tf,** this is advantageous in promoting a smooth expandable resin foaming towards the latter core-backing term **Ts** while preventing the skin layer from being broken through by abrupt foaming of the foaming agent.

Instead of stepwise increasing the core-backing speed in the previous core-backing term **Tf,** the core-backing speed may be continuously increased during the previous core-backing term **Tf** until the cavity volume of the mold extends up to 1.3 to 1.7 times larger than its original volume, and then may reach the second speed **V2** in the latter core-backing term **Ts.**

### Example 3

Figure **11** shows a core-backing control according to Example 3. In this example, in the previous core-backing term **Tf** after the elapse of the delay time, the core-backing speed is increased to the first speed **V1,** held at the first speed **V1** for a certain period of time and then reduced to zero to stop the core-backing. Thereafter, when the latter core-backing term **Ts** is reached, the core-backing speed is increased to the second speed **V2.**

Therefore, also according to this example, like Example 1, a good appearance molded foamed resin product can be obtained that has a homogeneous foam structure under the skin layer. Furthermore, since the core-backing speed is once reduced to zero during transition from the previous core-backing term **Tf** to the latter core-backing term **Ts,** this is advantageous in forming a high-strength skin layer to prevent the skin layer from being broken through by foaming.

### Example 4

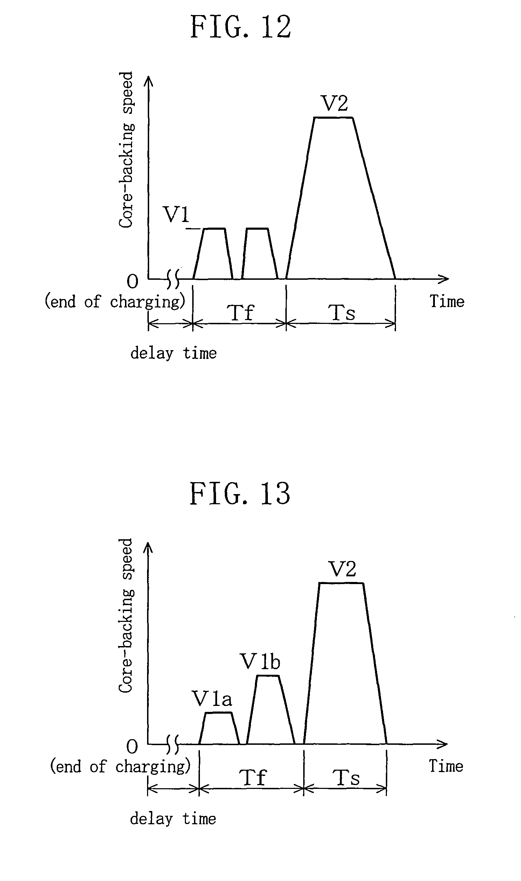

Figure **12** shows a core-backing control according to Example 4. In this example, in the previous core-backing term **Tf** after the elapse of the delay time, the core-backing speed is increased to the first speed **V1,** held at the first speed **V1** for a certain period of time, then once reduced to zero to stop the core-backing, then increased again to the first speed **V1,** held at the first speed **V1** for a certain period of time and then reduced again to zero. Thereafter, when the latter core-backing term **Ts** is reached, the core-backing speed is increased to the second speed **V2.**

Therefore, also according to this example, like Example 1, a good appearance molded foamed resin product can be obtained that has a homogeneous foam structure under the skin layer. Furthermore, since the core-backing speed is once reduced to zero midway in the previous core-backing term **Tf,** this is advantageous in forming a high-strength skin layer to prevent the skin layer from being broken through by foaming.

### Example 5

Figure **13** shows a core-backing control according to Example 5. In this example, like Example 2, the core-backing speed is stepwise increased first to a first A speed **V1a** and then to a first B speed **V1b** in the previous core-backing term **Tf** after the elapse of the delay time, and then increased to the second speed **V2** when the latter core-backing term **Ts** is reached. Unlike Example 2, however, the core-backing speed is reduced to zero between the first A and B speeds **V1a** and **V1b** and between the first B speed **V1b** and the second speed **V2** in the latter core-backing term **Ts.**

Therefore, also according to this example, like Example 1, a good appearance molded foamed resin product can be obtained that has a homogeneous foam structure under the skin layer. Furthermore, since the core-backing speed is once reduced to zero midway in the previous core-backing term **Tf,** this is advantageous in forming a high-strength skin layer to prevent the skin layer from being broken through by foaming.

### Example 6

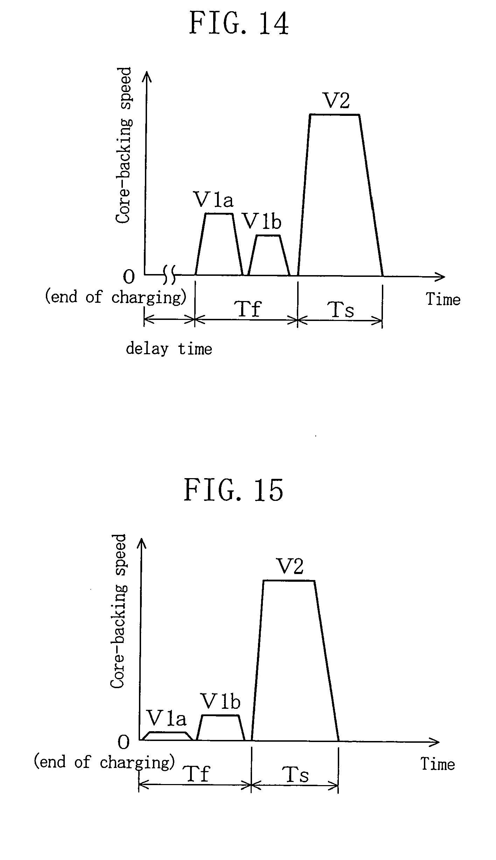

Figure **14** shows a core-backing control according to Example 6. In this example, like Example 5, the core-backing speed is once reduced to zero midway in the previous core-backing term **Tf** after the elapse of the delay time. Unlike Example 5, however, the first B speed **V1b** is lower than the first A speed **V1a.** The rest of the core-backing control are the same as according to Example 5.

Therefore, also according to this example, like Example 1, a good appearance molded foamed resin product can be obtained that has a homogeneous foam structure under the skin layer. Furthermore, since the core-backing speed is once reduced to zero midway in the previous core-backing term **Tf,** this is advantageous in forming a high-strength skin layer to prevent the skin layer from being broken through by foaming. Furthermore, since the first B speed **V1b** is lower than the first A speed **V1a,** the core-backing can make the transition from the previous core-backing term **Tf** to the latter core-backing term **Ts** with bubble cells in the foam arrayed, which is advantageous in forming homogeneous bubble cells.

### Example 7

Figure **15** shows a core-backing control according to Example 7. In this example, after the end of charging of an expandable resin, core-backing is immediately started without giving any delay time and the core-backing speed is stepwise increased as in Example 5. Since, however, no delay time is given after the end of charging unlike Example 5, the first A and B speeds **V1a** and **V1b** in the previous core-backing term **Tf** are restricted to lower levels.

Therefore, also according to this example, like Example 1, a good appearance molded foamed resin product can be obtained that has a homogeneous foam structure under the skin layer.

The molding method and apparatus for producing a molded foamed resin product according to the present invention can be applied to molding of automotive parts and other various kinds of molded foamed resin products. For example, applicable automotive parts include door module plates in which a speaker, a door latch assembly, a door lock actuating mechanism, a glass elevating mechanism and the like are incorporated, bumpers and other plate articles.

## Claims

1. A molding method for producing a molded foamed resin product in which an expandable resin (21) containing a resin material containing a foaming agent is charged into a cavity (16) between a stationary mold half (3) and a movable mold half (4) and core-backing is then performed by setting the movable mold half (4) back from the stationary mold half (3) to extend the cavity (16) to a volume corresponding to the size of the molded foamed resin product (24), wherein
the core-backing speed is controlled to be higher in a latter core-backing term (Ts) than in a previous core-backing term (Tf).

2. The molding method of claim 1, wherein the core-backing is started after the elapse of a predetermined delay time from the end of charging of the expandable resin (21).

3. The molding method of claim 1 or 2, wherein the core-backing speed in the latter core-backing term (Ts) is equal to or lower than the expansion speed of the expandable resin (21) in free expansion.

4. The molding method of any one of claims 1 to 3, wherein the core-backing is continued without stopping the movable mold half (4) over the previous and latter core-backing terms (Tf) and (Ts).

5. The molding method of any one of claims 1 to 3, wherein the core-backing speed is reduced to zero during transition from the previous core-backing term (Tf) to the latter core-backing term (Ts).

6. The molding method of any one of claims 1 to 5, wherein a physical foaming agent is used as the foaming agent.

7. The molding method of claim 6, wherein a supercritical fluid is used as the physical foaming agent.

8. A molding apparatus for producing a molded foamed resin product including: a mold (1) including a stationary mold half (3) and a movable mold half (4); a movable mold half actuator (6) for sliding the movable mold half (4) towards and away from the stationary mold half (3); and an injector (2) for charging an expandable resin (21) containing a resin material containing a foaming agent into a cavity (16) between the stationary mold half (3) and the movable mold half (4), in which, after the charging of the expandable resin (21), core-backing is performed by setting the movable mold half (4) back from the stationary mold half (3) to extend the cavity (16) to a volume corresponding to the size of the molded foamed resin product (24), the apparatus comprising
a controller (9) for controlling the movement of the movable mold half actuator (6) so that the core-backing speed is higher in a latter core-backing term (Ts) than in a previous core-backing term (Tf).

9. The molding apparatus of claim 8, wherein the controller (9) controls the movement of the movable mold half actuator (6) so that the core-backing is started after the elapse of a predetermined delay time from the end of charging of the expandable resin (21).

10. The molding apparatus of claim 8 or 9, wherein the controller (9) controls the movement of the movable mold half actuator (6) so that the core-backing speed in the latter core-backing term (Ts) is equal to or lower than the expansion speed of the expandable resin (21) in free expansion.

11. The molding apparatus of any one of claims 8 to 10, wherein the controller (9) controls the movement of the movable mold half actuator (6) so that the core-backing is continued without stopping the movable mold half (4) over the previous and latter core-backing terms (Tf) and (Ts).

12. The molding apparatus of any one of claims 8 to 10, wherein the controller (9) controls the movement of the movable mold half actuator (6) so that the core-backing speed is reduced to zero during transition from the previous core-backing term (Tf) to the latter core-backing term (Ts).

13. The molding apparatus of any one of claims 8 to 12, wherein a physical foaming agent is used as the foaming agent.

14. The molding apparatus of claim 13, wherein a supercritical fluid is used as the physical foaming agent.
